Europäisches Patentamt

European Patent Office

Office européen des brevets

(11) Veröffentlichungsnummer: **0 053 125**
**B1**

(12) **EUROPÄISCHE PATENTSCHRIFT**

(45) Veröffentlichungstag der Patentschrift:
28.03.84

(21) Anmeldenummer: 81901314.5

(22) Anmeldetag: 29.05.81

(86) Internationale Anmeldenummer:
**PCT/DE 81/00082**

(87) Internationale Veröffentlichungsnummer:
**WO 81/03511 (10.12.81 Gazette 81/29)**

(51) Int. Cl.³: **D 21 H 5/10,** B 41 M 3/14,
G 06 K 19/00, G 07 D 7/00

(54) **WERTPAPIER MIT ECHTHEITSMERKMALEN.**

(30) Priorität: 30.05.80 DE 3020653

(43) Veröffentlichungstag der Anmeldung:
09.06.82 Patentblatt 82/23

(45) Bekanntmachung des Hinweises auf die Patenterteilung:
28.03.84 Patentblatt 84/13

(84) Benannte Vertragsstaaten:
FR LU NL

(56) Entgegenhaltungen:
DE - A - 2 754 267
US - A - 3 612 835

Abstract Bulletin of the Institute of Paper Chemistry,
Band 51, Nr. 5, veröffentlicht im November 1980,
(Appleton, Wisconsin, US), siehe Seite 551, rechte
Spalte, Zusammenfassung 5054, JP, A, 3870478, 10. April
1978, Aomi, K. u.a.

(73) Patentinhaber: GAO GESELLSCHAFT FÜR
AUTOMATION UND ORGANISATION MBH,
Euckenstrasse 12, D-8000 München 70 (DE)

(72) Erfinder: KAULE, Wittich, Germeringer Strasse 50,
D-8035 Gauting (DE)
Erfinder: SCHWENK, Gerhard, Edelweissstrasse 20,
D-8031 Puchheim (DE)
Erfinder: STENZEL, Gerhard, Schiessstättstrasse 6,
D-8000 München 2 (DE)

(74) Vertreter: Kador . Klunker . Schmitt-Nilson . Hirsch,
Corneliusstrasse 15, D-8000 München 5 (DE)

Wertpapier mit Echtheitsmerkmalen

Die Erfindung betrifft ein Wertpapier mit Echtheitsmerkmalen in Form von zugesetzten oder aufgebrachten Farbmitteln mit magnetischen Eigenschaften.

Es ist bereits bekannt, Wertpapiere, d.h. Banknoten, Ausweiskarten, Dokumente und dergleichen mit magnetischen Farbmitteln zu bedrukken oder in ihnen magnetisierbare Stoffe einzubetten. Derartig präparierte Wertpapiere können nach entsprechender magnetischer Erregung durch Automaten vermessen und auf ihre Echtheit geprüft werden. Als geeignete magnetisierbare Stoffe werden vorzugsweise oxydische Eisenverbindungen wie $\gamma$-Ferrioxid oder Ferri-Ferrooxid oder auch Ferrite eingesetzt. Diese Verbindungen haben jeweils einen bestimmten Farbton, wobei die Stoffe um so dunkler wirken, je stärker ihre magnetischen Eigenschaften sind (DE-C-843 660).

In der DE-A-27 54 267 wird ein Wertpapier mit einer Sicherungseinrichtung beschrieben, die einerseits ein magnetisches Material enthält und andererseits ein weiteres Material, das luminesziert oder Röntgenstrahlung merklich absorbiert und/oder welches ein Metall ist. Die Sicherungseinrichtung ist als Folienstreifen aufgeführt, welcher von der einen Seite mit einer üblichen Magnetpiste versehen ist und auf der anderen Seite mit dem lumineszierenden oder röntgenstrahlabsorbierenden Material oder Metall beschichtet ist. Die zur Herstellung von üblichen Magnetpisten und Magnetbeschichtungen zur Datenaufzeichnung verwendeten magnetischen Werkstoffe absorbieren aber im IR kräftig, so dass eine derartige Sicherheitseinrichtung eine Prüfung des Wertpapiers mit IR-Licht zumindest an den Stellen stört, an denen die Sicherheitsvorrichtung vorhanden ist. Ausserdem ist das magnetische Material nicht selbst Träger der zweiten Merkmalseigenschaft; sehr zum Nachteil der erzielbaren Echtheitssicherung ist, dass das die zweite Merkmalseigenschaft tragende Material durch eine Folie von der Magnetpiste getrennt ist. Die beiden als Echtheitskriterien verwendeten Eigenschaften sind deshalb nicht am selben, eng lokalisierten Ort anzutreffen und dadurch voneinander trennbar.

Obwohl die Ausrüstung von Wertpapieren mit magnetischen Tinten und/oder Echtheitsmerkmalen ein grosser Fortschritt in Richtung einer automationsgerechten Banknote bzw. eines automationsgerechten Wertpapiers darstellt, reicht eine Überprüfung bzw. Auswertung der magnetischen Eigenschaften eines Wertpapiers nach heutigem Sicherheitsstandard nicht mehr aus. In letzter Zeit geht man mehr und mehr dazu über, die Banknoten mit nicht sichtbarer elektromagnetischer Strahlung abzutasten und dabei bestimmte Prüfungen vorzunehmen. Da eine Reihe der beim Banknotendruck verwendeten Druckfarben im IR-Bereich des optischen Spektrums praktisch nicht absorbieren, d.h. in diesem Bereich «farblos» (IR-farblos) oder «weiss» (IRweiss) erscheinen, wurde bereits vorgeschlagen, derartig bedruckte Banknoten mit IR-Licht zu bestrahlen und den remittierten Strahlungsanteil auszuwerten. Mit diesem Verfahren ist es möglich, den Zustand einer Banknote unabhängig von den Druckbildern festzustellen, die von der Prüfspur überfahren werden. Da Verschmutzungen im IR-Bereich des Spektrums gleiche optische Eigenschaften wie bei Bestrahlung mit sichtbarem Licht zeigen, lässt sich auf diese Weise der Verschmutzungsgrad unbeeinflusst vom jeweiligen Druckbild feststellen. Ein derartiges Prüfverfahren setzt Wertpapiere mit Aufdrucken aus den bereits erwähnten Druckfarben voraus, die im IR-Bereich des Spektrums entsprechend durchlässig sind.

Es hat auch bereits Versuche gegeben, Magnetbeschichtungen zu entwickeln, die im sichtbaren Bereich des Spektrums durchsichtig sind, so dass eine entsprechende Verwendung mit blossem Auge nicht besonders auffällt. Ein Fälscher könnte derartige Beschichtungen gegebenenfalls übersehen und somit einen Fälschungsversuch offenkundig machen (GB-A-1 514 758). In der Fachwelt ist man allerdings der Auffassung, dass die genannten Stoffe nur bei sehr tiefen Temperaturen ferromagnetisch sind. Eine Anwendung dieser Stoffe in Magnetfarben bei Wertpapieren erscheint deshalb nicht sinnvoll.

Es ist weiterhin bekannt, die Semitransparenz mancher Magnetstoffe im IR-Bereich des Spektrums auszunutzen, um unter einer Magnetdatenspur liegende reflektierende Markierungen durch entsprechende Bestrahlung zu erkennen. Die Aufbringung von Informationen auf eine Datenspur setzt jedoch ein magnetisches Material mit einer Remanenz von bestimmter Grössenordnung voraus. Die bekannten magnetischen Werkstoffe, welche die geforderte Remanenz besitzen, bleiben zwar, in dünnen Schichten aufgetragen, im IR-Bereich des Spektrums etwas transparent, so dass beispielsweise ein unter der Datenspur angeordnetes IR-Strahlung reflektierendes Element noch feststellbar wird, von einer echten IR-Farblosigkeit, die etwa im Bereich der IR-Farblosigkeit des Papierträgers für IR-Strahlung liegt und damit auch Messungen der Verschmutzung zulässt, kann jedoch keine Rede sein (DE-A-26 23 708).

Es ist ferner aus der CH-A-588 740 eine Magnetkarte bekannt, bei der zur Echtheitsprüfung eine optische Eigenschaft der Magnetdatenspur herangezogen werden kann. Aber auch hier handelt es sich um die bekannten magnetischen Werkstoffe, welche zur Datenaufzeichnung verwendet werden und die nicht die optischen Eigenschaften aufweisen, welche Voraussetzung für die Lösung der erfindungsgemässen Aufgabe sind, die insbesondere im IR nicht ausreichend transparent sind.

Zusammenfassend war es also für die Durchführung bestimmter Prüfungen bekannt, Wertpapiere mit Farben zu bedrucken, die im IR-Bereich des Spektrums wenig absorbieren. Diese Stoffe wiesen jedoch keine magnetischen Eigenschaften auf. Andererseits war es bekannt, Wertpapiere mit Magnetstoffen abzusichern. Diese Magnetstoffe absorbieren jedoch im gesamten optischen Spektralbereich bis in Infrarot hinein relativ stark. Die Kombination von magnetischen und Transmissionseigenschaften stösst demgemäss auf Schwierigkeiten.

Der Erfindung liegt die Aufgabe zugrunde, ein Wertpapier mit Echtheitsmerkmalen in Form von zugesetzten oder aufgebrachten Farbmitteln zu schaffen, das einerseits eine Überprüfung seiner IR-Transmissionseigenschaften, gegebenenfalls auch im Druckbild ermöglicht und andererseits magnetische Eigenschaften aufweist, wobei beide Prüfungen voneinander unbeeinflusst, aber an derselben Stelle des Wertpapiers durchführbar sein sollen.

Erfindungsgemäss wird diese Aufgabe dadurch gelöst, dass die Farbmittel Infrarotstrahlung wenigstens eines bestimmten Spektralbereichs weniger oder in etwa gleich stark absorbieren wie der Papierträger selbst.

Vorzugsweise weisen die Farbmittel im IR-Bereich des Spektrums ein «optisches Fenster» auf, d.h. die Durchlässigkeit für Infrarotstrahlen bzw. der Absorptionskoeffizient fällt wenigstens an der kurzwelligen Grenze des Bereichs steil auf etwa die Werte des Papierträgers ab.

Vorzugsweise bestehen die Farbmittel aus einer ferrimagnetischen Granatverbindung der Formel $M_3Fe_5O_{12}$ oder die Farbmittel weisen eine solche Verbindung auf, wobei M ein Wismut- oder ein Seltenerdmetallion darstellt. Selbstverständlich können auch davon abgeleitete Mischkristalle eingesetzt werden.

Zur Verbesserung der Durchlässigkeit im sichtbaren Bereich des optischen Spektrums kann Eisen (Fe) auch teilweise durch andere Elemente substituiert werden. Derartige Farbmittel können dann auch ohne Einschränkung hellen Druckfarben zugesetzt werden. So können ferrimagnetische Granatverbindungen der allgemeinen Formel $M_{3-2x}M'_{2x}Fe_{5-x}V_xO_{12}$ Verwendung finden; dabei kann x Werte zwischen 0 und 1,2 annehmen, M ist ein Seltenerdmetall oder Wismut und M' steht für Kalzium, Magnesium, Strontium oder Barium.

Dieser Mischgranat hat dabei die Struktur des seit langem bekannten YIG bzw. YAG (Yttriumeisengranat bzw. Yttriumaluminiumgranat) wobei Yttrium teilweise oder ganz durch die Elemente M und M' aus den genannten Stoffgruppen substituiert sein kann, sofern der Gitterbaustein Eisen teilweise durch Vanadium ersetzt ist.

Weiter entsprechen ferrimagnetische Granatverbindungen der allgemeinen Formel $M_{3-x}M'_xFe_{5-x}M'_x{}'O_{12}$ den erfindungsgemässen Anforderungen; dabei kann x Werte zwischen 0 und 3 annehmen, M bezeichnet ein Seltenerdmetall oder auch Wismuth, M' ist ein Element aus der Gruppe Kalzium, Strontium, Barium, Magnesium, Zink, Kadmium und M" ist ein Element aus der Gruppe Silizium, Germanium, Zinn und Tellur.

Diese Verbindungen entsprechen dem seit langem bekannten YIG (Yttriumeisengranat) wobei Yttrium hier ganz oder teilweise durch M und M' aus den genannten Stoffgruppen substituiert ist und zur Ladungskompensation Eisen durch ein vierwertiges Element M" wie angegeben ersetzt ist.

Schliesslich eignen sich auch Granatverbindungen der allgemeinen Formel $M_3Fe_{5-x}M'_xO_{12}$, wobei x Werte zwischen 0 und 5 annehmen kann wobei M ein Wismut- oder Seltenerdmetallion darstellt und M' ein Element aus der Gruppe Aluminium, Gallium und Indium bezeichnet.

Auch diese Verbindungen leiten sich von YIG ab, wobei hier Yttrium durch die genannten Elemente M ersetzt sein kann und der Gitterbaustein Eisen durch die dreiwertigen Elemente M' wie angegeben substituiert ist.

Die oben genannten Eisengranate haben im IR einen hochtransparenten Bereich, der etwa zwischen 0,7 und 10 μm liegt.

Ausser den Granatverbindungen eignen sich auch ferromagnetische Verbindungen, die aufgrund ihrer grünen Farbe in der technischen Literatur als «grüne Ferromagnete» klassifiziert werden. Wir nennen aus dieser Gruppe das Pigment Eisenborat $FeBO_3$, welches im Bereich von 0,97 μm bis 1,29 μm eine ausreichende Transmission aufweist und das lösliche Eisenfluorid $FeF_3$, welches im Bereich von 0,7 μm bis 2,5 μm einen Absorptionskoeffizienten kleiner als 1 cm$^{-1}$ besitzt.

Weniger IR-durchlässig, aber für eine Reihe von Papieren geeignet und im Rahmen der vorstehenden Definition erfindungsgemäss sind auch Verbindungen aus der Klasse der Ferrite. Wir nennen $Li_{0,5}Fe_{2,5}O_4$ (Lithium-Ferrit) bzw. $MgFe_2O_4$ (Magnesium-Ferrit), die im Bereich um 5 μm einen Absorptionskoeffizienten kleiner als 100 cm$^{-1}$ bzw. 10 cm$^{-1}$ besitzen.

Die erfindungsgemäss angewendeten Stoffe eröffnen auch die Möglichkeit einer Dotierung mit Seltenerdmetallen, wobei die in das Wirtsgitter eingelagerten Ionen z.B. im sichtbaren Bereich des Spektrums angeregt werden und in dem «optischen Fenster» eine schmalbandige Fluoreszenzemission aufweisen. Diese Emissionslinien können quantitativ vermessen werden und stellen ein weiteres wertvolles Echtheitsmerkmal des Wertpapiers dar.

Die genannten Stoffe sind an sich bekannt. Sie wurden in Form von Einkristallen, als Festkörper-Laser, als Lichtmodulatoren mit magnetisch-optischer Wechselwirkung bzw. als magnetische Speichermedien (Bubbles) eingesetzt und sind beispielsweise in der US-A-3 447 851 (Modulator) sowie in der US-A-3 480 877 (Laser) und bei Bobeck A.H., Della Torre E. «Magnetic Bubbles», New York 1975 (Bubbles) beschrieben. Hinweise, diese Stoffe in Pulverform als IR-transparente Magnetpigmente zur Sicherung von Wertpapieren einzusetzen, sind der Literatur nicht zu entnehmen.

Mit der Erfindung wird die interessante Möglichkeit an Wertpapieren eröffnet, unter Beibehaltung üblicher IR-durchlässiger Druckbilder deren magnetische Eigenschaften zu messen. Damit werden vorteilhafte Kombinationen ermöglicht, beispielsweise kann eine spezielle Fluoreszenz im Bereich des IR-Fensters und gleichzeitig magnetische Eigenschaften gemessen werden, beides an nur einem einzigen Merkmalstoff. Auch die Herstellung des entsprechend abgesicherten Wertpapiers wird dadurch vereinfacht.

Die Farbmittel können beispielsweise mit einer nach üblichem Verfahren hergestellten Stahldruckfarbe vermischt werden. Es ist auch möglich, einen in das Wertpapier eingebetteten Sicherheitsfaden vorher mit dem Farbmittel zu beschichten oder auch in den Papierbrei eingebrachte Melierfasern mit dem erfindungsgemässen Stoff anzufärben.

Die Herstellung einer geeigneten Granatverbindung für die erfindungsgemässen Wertpapiere wird nachstehend anhand zweier Beispiele näher beschrieben.

Beispiel Nr. 1:
Hergestellt werden ein Erbium-aktivierter-Yttrium-Aluminium/Eisen-Mischgranat:

$$Y_{2,82}Fe_{3,6}Al_{1,4}O_{12} : Er_{0,18}.$$

63,67 g Yttriumoxid $Y_2O_3$, 6,88 g Erbiumoxid $Er_2O_3$, 57,5 g Eisenoxid $Fe_2O_3$, 14,3 g Aluminiumoxid $Al_2O_3$ und 45 g entwässertes Natriumsulfat $Na_2SO_4$ werden sorgfältig in Aluminiumoxidtiegel abgefüllt und 14 Stunden lang bei 1100°C geglüht. Nach dem Abkühlen wird das Reaktionsprodukt zerkleinert, mit Wasser das Flussmittel herausgewaschen und das Reaktionsprodukt anschliessend bei 100°C an Luft getrocknet. Zum Erzielen eines möglichst feinen Korns wird das Pulver danach in einer Rührwerkskugelmühle vermahlen. Man erhält ein hellgrünes Pulver mit einer mittleren Korngrösse von 1 µm, welches im IR-Bereich ausreichende Transparenz zeigt und ferrimagnetisch ist.

Beispiel Nr. 2:
Hergestellt wird ein Gadolinium-Eisengranat

$$Gd_3Fe_5O_{12}$$

108,75 g Gadoliniumoxid $Gd_2O_3$, 79,8 g Eisenoxid $Fe_2O_3$ und 70 g Natriumsulfat $Na_2SO_4$ wurden innig vermischt und an Luft in einem Korundtiegel bei 1000°C 10 Stunden lang erhitzt.
Nach dem Abkühlen wurde das Sinterprodukt vermahlen und weitere 10 Stunden bei 1100°C geglüht.
Nach dem Abkühlen und erneuten Vermahlen wurde das Flussmittel Natriumsulfat $Na_2SO_4$ mit Wasser ausgewaschen und das erhaltene Material in einer Rührwerkskugelmühle mikronisiert.
Nach dem Digerieren mit Wasser und Alkohol wurde 4 Stunden bei 120°C getrocknet.
Es wurde ein grünes Pulver mit einer mittleren Korngrösse von unter 1 µm erhalten, das im IR-Bereich eine ausreichende Transparenz zeigt. Die ferrimagnetischen Eigenschaften des Pulvers sind mit üblichen Vorrichtungen, z.B. mit Feldplatten, festzustellen.

Durch Dotierung mit Erbium kann man zusätzlich Fluoreszenzemission im IR-Bereich erzielen; anstelle von 108,75 g Gadoliniumoxid $Gd_2O_3$ sind dazu im oben genannten Rezept nur 101,58 g einzusetzen und dafür zusätzlich 7,65 g Erbiumoxid $Er_2O_3$ beizumischen. Das so erhaltene Pulver gleicht sowohl in seinen optischen als auch in seinen magnetischen Eigenschaften dem nichtdotierten, weist aber zusätzlich eine Fluoreszenzemission bei 1,5 µm auf, welche mit geeigneten bekannten Prüfvorrichtungen nachgewiesen werden kann.

Nachstehend wird die Herstellung einer Druckfarbe mit den erfindungsgemässen Farbmitteln beispielhaft beschrieben.

100 g Alkydharz, 20 g Kobaltnaphthenat, 50 g Scheuerpaste, 190 g Leinöl, 160 g Maleinatharz und 180 g hochsiedendes Mineralöl wurden auf einem Dreiwalzenstuhl innig vermischt. Zu diesem Firnis wurden 100 g des Farbmittels gemäss vorstehendem Beispiel und 100 g eines Farbpigments zur Erzielung eines bestimmten Farbtons, z.B. Permanentgelb H10G, Hansarot 3B, Hostapermgrün 8G oder Hostapermblau AR (alles eingetragene Warenzeichen der Fa. Hoechst) zugegeben. Firnis, Farbpigment und das erfindungsgemässe Farbmittel wurden auf dem Dreiwalzenstuhl innig vermischt. Die erhaltenen Druckfarben zeigten sich für den Banknoten-Guillochendruck geeignet. Sie können in allen Drucktechniken eingesetzt werden, welche bei Wertdrucken angewandt werden, insbesondere auch im Stahltiefdruck.

Ein bevorzugtes Prüfverfahren für Wertpapiere mit erfindungsgemässen Echtheitskennzeichen ist der gleichzeitige und an gleichem Ort vorgenommene Nachweis der Magnetisierbarkeit und der IR-Durchlässigkeit, die gegebenenfalls noch durch eine entsprechende Messung der Absorption im sichtbaren Spektralbereich ergänzt werden kann.

Geeignete Prüfvorrichtungen zur Durchführung dieses Verfahrens sind grundsätzlich bekannt.

So beschreibt bereits die US-A- 3 612 835 einen Messkopf, mit dem gleichzeitig und an gleicher Stelle die magnetischen Eigenschaften wie auch die Absorption im sichtbaren Spektralbereich gemessen werden kann. Dazu ist der Spalt des Magnetkopfes mit einem transparenten Material ausgefüllt, das bis zu einer im Magnetkopfinnern eingebauten Si-Fotodiode reicht.

Mit geringen Abänderungen kann dieser Prüfkopf auch als Prüfgerät für erfindungsgemässes Wertpapier Anwendung finden. Hierfür wird das im Magnetspalt angeordnete, im sichtbaren Bereich transparente Material durch IR-transparentes, VIS-absorbierendes Material, z.B. Gläser wie Schott RG 1000 (Handelsbezeichnung) oder Silizium bzw. Germanium ersetzt. Diese Stoffe sind in den verwendeten Materialstärken im Sichtbaren undurchsichtig, besitzen aber im IR ab Wellenlängen von 1,1 µm bzw. 1,6 µm ein Fenster hoher Durchlässigkeit.

Um den Detektor dem anders gelegenen Spektralbereich anzupassen, wird das in der US-PS 3 612 835 vorgesehene Si-Fotoelement gegebenenfalls durch einen auch im langwelligen IR empfindlichen Fotodetektor, z.B. einen PbS-Fotowiderstand, ersetzt.

Als Beleuchtungsquelle kann beispielsweise eine Glühlampe Anwendung finden.

Der so gestaltete Prüfkopf erfasst im Bereich des Jochspaltes die Magnetisierung und die IR-Absorption. Durch die Auswerteelektronik wird ermittelt, ob an der gemessenen Stelle sowohl Magnetisierbarkeit als auch IR-Durchlässigkeit vorliegt.

Das vorstehend beschriebene Beispiel soll in keiner Weise den Anwendungsbereich der Erfindung einschränken. Vielmehr werden alle diejenigen Stoffe als für die Erfindung geeignet angesehen, die einerseits ein hochtransparentes Fenster im IR-Bereich aufweisen und andererseits ferro- oder ferrimagnetische Eigenschaften zeigen. Derartige Stoffe können auch aus der Gruppe der Seltenerd-Orthoferrite, der Seltenerd-Eisenperovskite und auch der Erdalkali-Ferrite nach Durchführung entsprechender Versuche ausgewählt werden.

## Patentansprüche

1. Wertpapier, das für Infrarotstrahlung durchlässig oder nahezu durchlässig ist, mit einem Echtheitsmerkmal in Form von dem Papierträger zugesetzten oder auf ihm aufgebrachten Farbmitteln mit magnetischen Eigenschaften und mit weiteren Echtheitsmerkmalen, dadurch gekennzeichnet, dass die Farbmittel die Infrarotstrahlung wenigstens eines bestimmten Spektralbereiches weniger oder in etwa gleich schwach absorbieren wie der Papierträger selbst.

2. Wertpapier nach Anspruch 1, dadurch gekennzeichnet, dass sich die Durchlässigkeitskurve für Infrarotstrahlen (IR) an der kurzwelligen Grenze des Spektralbereichs mit charakteristischer Struktur ändert.

3. Wertpapier nach Anspruch 1 oder 2, dadurch gekennzeichnet, dass die Farbmittel aus einer ferrimagnetischen Granatverbindung der allgemeinen Formel $M_{3-2x}M'_{2x}Fe_{5-x}V_xO_{12}$ bestehen, wobei x Werte zwischen 0 und 1,2 annehmen kann, wobei M ein Seltenerdmetall oder Wismut bezeichnet und wobei ferner M' ein Element aus der Gruppe Kalzium, Magnesium, Strontium und Barium ist.

4. Wertpapier nach Anspruch 1 oder 2, dadurch gekennzeichnet, dass die Farbmittel aus einer ferrimagnetischen Granatverbindung der allgemeinen Formel $M_{3-x}M'_xFe_{5-x}M''_xO_{12}$ bestehen, wobei x Werte von 0 bis 3 annehmen kann, wobei M ein Seltenerdmetall oder Wismut bezeichnet, wobei ferner M' ein Element aus der Gruppe Kalzium, Strontium, Barium, Magnesium, Zink, Kadmium und M'' ein Element aus der Gruppe Silizium, Germanium, Zinn und Tellur ist.

5. Wertpapier nach Anspruch 1 oder 2, dadurch gekennzeichnet, dass die Farbmittel aus einer ferrimagnetischen Granatverbindung der allgemeinen Formel $M_3Fe_{5-x}M'_xO_{12}$ bestehen, wobei x Werte von 0 bis 5 annehmen kann wobei M ein Seltenerdmetall oder Wismut und M' ein Element aus der Gruppe Aluminium, Gallium und Indium ist.

6. Wertpapier nach Anspruch 1 bis 5, dadurch gekennzeichnet, dass der schwach absorbierende Bereich im IR zwischen 0,7 und 10 µm liegt.

7. Wertpapier nach einem oder mehreren der vorhergehenden Ansprüche, dadurch gekennzeichnet, dass die Granatverbindungen mit Seltenerdmetallen dotiert sind und bei Anregung eine schmalbandige Emission aufweisen.

8. Wertpapier nach Anspruch 1 oder 2, dadurch gekennzeichnet, dass die Farbmittel aus einer grünen ferromagnetischen Verbindung bestehen.

9. Wertpapier nach Anspruch 8, dadurch gekennzeichnet, dass die grüne ferromagnetische Verbindung Eisenborat $FeBO_3$ ist.

10. Wertpapier nach Anspruch 8, dadurch gekennzeichnet, dass die grüne ferromagnetische Verbindung Eisenfluorid $FeF_3$ ist.

11. Wertpapier nach Anspruch 1 oder 2, dadurch gekennzeichnet, dass die Farbmittel aus einer zur Gruppe der Ferrite gehörenden Verbindung bestehen.

12. Wertpapier nach Anspruch 11, dadurch gekennzeichnet, dass die zu den Ferriten gehörende Verbindung $Li_{0,5}Fe_{2,5}O_4$ (Lithium-Ferrit) ist.

13. Wertpapier nach Anspruch 11, dadurch gekennzeichnet, dass die zu den Ferriten gehörende Verbindung $MgFe_2O_4$ (Magnesium-Ferrit) ist.

14. Wertpapier nach einem der Ansprüche 8 bis 13, dadurch gekennzeichnet, dass der schwach absorbierende Bereich im IR zwischen 0,7 und 10 µm liegt.

15. Prüfverfahren für ein Wertpapier nach einem der vorstehenden Ansprüche, dadurch gekennzeichnet, dass dan gleicher Stelle des Wertpapiers gleichzeitig die Magnetisierbarkeit und das Nichtvorhandensein bzw. Vorhandensein von Absorption im infraroten Bereich des optischen Spektrums geprüft wird.

16. Prüfverfahren für ein Wertpapier nach Anspruch 15, dadurch gekennzeichnet, dass zusätzlich an gleicher Stelle des Wertpapiers und gegebenenfalls gleichzeitig die Absorption im sichtbaren Bereich des optischen Spektrums ermittelt wird.

17. Prüfverfahren für ein Wertpapier nach Anspruch 15, dadurch gekennzeichnet, dass an gleicher Stelle des Wertpapiers und gegebenenfalls gleichzeitig eine Lumineszenzemission ermittelt wird.

## Claims

1. A security paper which is transparent or almost transparent to infrared radiation, having an authenticity feature in the form of colorants with magnetic properties added or applied to the paper base, and further authenticity features, characterized in that the colorants absorb the infrared radiation of at least one certain spectral range less or approximately just as weakly as the paper base itself.

2. A security paper as in claim 1, characterized in that the transparency curve for infrared rays (IR) is altered with a characteristic structure at the short-wave boundary of the spectral range.

3. A security paper as in claim 1 or 2, characterized in that the colorants consist of a ferrimagnetic garnet compound with the general formula $M_{3-2x}M'_{2x}Fe_{5-x}V_xO_{12}$, in which x can assume values between 0 and 1.2, M refers to a rare earth metal or bismuth and M' is an element belonging to the group of calcium, magnesium, strontium and barium.

4. A security paper as in claim 1 or 2, characterized in that the colorants consist of a ferrimagnetic garnet compound with the general formula $M_{3-x}M'_xFe_{5-x}M''_xO_{12}$, in which x can assume values between 0 and 3, M refers to a rare-earth metal or bismuth, M' is an element belonging to the group of calcium, strontium, barium, magnesium, zinc, cadmium and M'' is an element belonging to the group of silicon, germanium, tin and tellurium.

5. A security paper as in claim 1 or 2, characterized in that the colorants consist of a ferrimagnetic garnet compound with the general formula $M_3Fe_{5-x}M'_xO_{12}$, in which x can assume values between 0 and 5, M is a rare earth metal or bismuth and M' is an element belonging to the group of aluminum, gallium and indium.

6. A security paper as in claims 1 to 5, characterized in that the weakly absorbant range in the infrared is between 0.7 and 10 μm.

7. A security paper as in one or more of the above claims, characterized in that the garnet compounds are doped with rare earth metals and show narrow-band emission when excited.

8. A security paper as in claim 1 or 2, characterized in that the colorants consist of a green ferromagnetic compound.

9. A security paper as in claim 8, characterized in that the green ferromagnetic compound is iron borate $FeBO_3$.

10. A security paper as in claim 8, characterized in that the green ferromagnetic compound is iron fluoride $FeF_3$.

11. A security paper as in claim 1 or 2, characterized in that the colorants consist of a compound belonging to the ferrite group.

12. A security paper as in claim 11, characterized in that the compound belonging to the ferrite group is lithium ferrite $Li_{0.5}Fe_{2.5}O_4$.

13. A security paper as in claim 11, characterized in that the compound belonging to the ferrite group is magnesium ferrite $MgFe_2O_4$.

14. A security paper as in any of claims 8 to 13, characterized in that the weakly absorbant range in the infrared is between 0.7 and 10 μm.

15. A test method for a security paper as in any of the above claims, characterized in that the magnetizability and the absence or presence of absorption in the infrared range of the optical spectrum are tested at the same time at the same place on the security paper.

16. A test method for a security paper as in claim 15, characterized in that the absorption in the visible range of the optical spectrum is also detected at the same place on the security paper and possibly at the same time.

17. A test method for a security paper as in claim 15, characterized in that a luminescence emission is detected at the same place on the security paper and possibly at the same time.

**Revendications**

1. Papier fiduciaire, transparent ou presque transparent au rayonnement infrarouge, avec une marque d'authenticité se présentant sous la forme de colorants, ajoutés au supportpapier ou appliqués sur lui, avec des propriétés magnétiques et d'autres marques d'authenticité, caractérisé en ce que les colorants absorbent le rayonnement infrarouge, au moins d'un certain domaine spectral, moins ou d'une manière sensiblement aussi faible que le support papier lui-même.

2. Papier fiduciaire selon la revendication 1, caractérisé en ce que la courbe de transparence pour les rayons infrarouges (IR) se modifie d'une manière caractéristique à la limite des courtes longueurs d'onde du domaine spectral.

3. Papier fiduciaire selon l'une quelconque des revendications 1 et 2, caractérisé en ce que les colorants sont constitués d'un composé de grenat ferrimagnétique de formule générale $M_{3-2x}M'_{2x}Fe_{5-x}V_xO_{12}$, où x peut prendre des valeurs comprises entre 0 et 1,2, M désigne un métal des terres rares ou le bismuth, et où M' représente en outre un élément du groupe comprenant le calcium, le magnésium, le strontium et le baryum.

4. Papier fiduciaire selon l'une quelconque des revendications 1 et 2, caractérisé en ce que les colorants sont constitués d'un composé de grenat ferrimagnétique de formule générale $M_{3-x}M'_xFe_{5-x}M''_xO_{12}$, x pouvant prendre des valeurs comprises entre 0 et 3, M désignant un métal des terres rares ou le bismuth, M' étant en outre un élément choisi dans le groupe comprenant le calcium, le strontium, le baryum, le magnésium, le zinc et le cadmium, M'' étant un élément du groupe comprenant le silicium, le germanium, le zinc et le tellure.

5. Papier fiduciaire selon l'une quelconque des revendications 1 et 2, caractérisé en ce que les colorants sont constitués d'un composé de grenat ferrimagnétique de formule générale $M_3Fe_{5-x}M'_xO_{12}$, où x peut prendre des valeurs comprises entre 0 et 5, M est un métal des terres rares ou le bismuth, et M' est un élément du groupe comprenant l'aluminium, le gallium et l'indium.

6. Papier fiduciaire selon l'une quelconque des revendications 1 à 5, caractérisé en ce que le domaine faiblement absorbant des IR est compris entre 0,7 et 10 μm.

7. Papier fiduciaire selon l'une quelconque des revendications précédentes, caractérisé en ce que les composés de grenat sont dopés par des métaux des terres rares et, que soumis à une excitation, ils présentent une émission à bande étroite.

8. Papier fiduciaire selon l'une quelconque des revendications 1 et 2, caractérisé en ce que les colorants sont constitués d'un composé ferromagnétique vert.

9. Papier fiduciaire selon la revendication 8, caractérisé en ce que le composé ferromagnétique vert est le borate de fer $FeBO_3$.

10. Papier fiduciaire selon la revendication 8, caractérisé en ce que le composé ferromagnétique vert est le fluorure de fer $FeF_3$.

11. Papier fiduciaire selon l'une quelconque des revendications 1 et 2, caractérisé en ce que les colorants sont constitués d'un composé appartenant au groupe des ferrites.

12. Papier fiduciaire selon la revendication 11, caractérisé en ce que le composé appartenant aux ferrites est $Li_{0,5}Fe_{2,5}O_4$ (lithium-ferrite).

13. Papier fiduciaire selon la revendication 11, caractérisé en ce que le composé appartenant aux ferrites est $MgFe_2O_4$ (magnésium-ferrite).

14. Papier fiduciaire selon l'une quelconque des revendications 8 à 13, caractérisé en ce que le domaine faiblement absorbant des IR est compris entre 0,7 et 10 μm.

15. Procédé de contrôle d'un papier fiduciaire selon l'une quelconque des revendications précédentes, caractérisé en ce qu'on détermine simultanément, au même point du papier fiduciaire, l'aptitude à la magnétisation et l'absence ou la présence d'une absorption dans le domaine infrarouge du spectre optique.

16. Procédé de contrôle d'un papier fiduciaire selon la revendication 15, caractérisé en ce qu'on détermine en outre, au même point du papier fiduciaire, et éventuellement simultanément, l'absorption dans le domaine visible du spectre optique.

17. Procédé de contrôle d'un papier fiduciaire selon la revendication 15, caractérisé en ce qu'on détermine au même point du papier fiduciaire, et éventuellement simultanément, une émission du type luminescence.